# EUROPÄISCHE PATENTANMELDUNG

(11) **EP 0 920 145 A2**
(43) Veröffentlichungstag der Anmeldung: **02.06.1999**
(21) Anmeldenummer: 98121916.5
(22) Anmeldetag: 18.11.1998
(51) Int. Cl.: H04B 7/26

(54) **Übertragungssystem zur Übertragung von Digitalsignalen in einem Funk-Teilnehmeranschlussnetz**

(30) Priorität: 25.11.1997 DE 19752200
(71) Anmelder: SIEMENS AKTIENGESELLSCHAFT, 80333 München (DE)
(72) Erfinder: Zirwas, Wolfgang, 82194 Gröbenzell (DE)

(57) **Zusammenfassung**

In einem System zur Übertragung von Digitalsignalen in einem Funk-Teilnehmeranschlussnetz ist für die Digitalsignalübertragung von der Basisstation einer Funkzelle zu den in der Funkzelle befindlichen Funkteilnehmern hin die Gesamt-Sendeleistung der Basisstation auf eine Mehrzahl von Frequenz-Teilbändern und/oder Zeitabschnitten mit unterschiedlicher Sendeleistung aufgeteilt, von denen jeder Verbindung von der Basisstation zu einem Funkteilnehmer hin nach Maßgabe von dessen Entfernung von der Basisstation ein oder mehrere Frequenz-Teilbänder bzw. Zeitabschnitte mit der benötigten Sendeleistung zugeordnet werden.

## Beschreibung

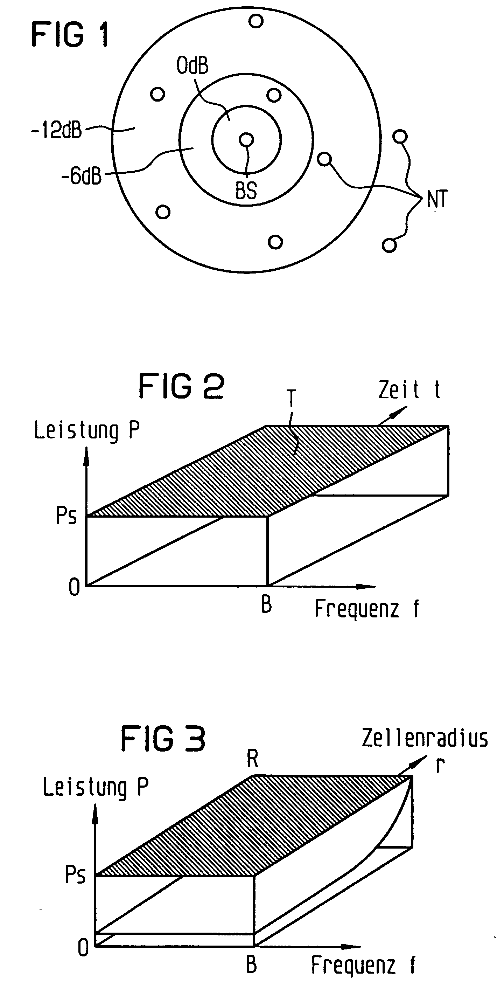

Ein Funk-Teilnehmeranschlussnetz ist ein - typischerweise flächendeckendes - System von Funkzellen, die jeweils eine - in der Regel möglichst zentral gelegene - ortsfeste Basisstation enthalten, um die herum in einem Radius von z.B. 1 km sich, mehr oder weniger homogen verteilt, die Network Terminations (NTs) der Funkteilnehmer befinden. Eine solche Funkzelle ist in der Zeichnung FIG 1 skizziert, in der die Basisstation mit BS und die Funkteilnehmer (bzw. ihre Network Terminations) mit NT bezeichnet sind. Da in einem Funksystem die Funkfelddämpfung quadratisch mit der Entfernung zunimmt, ist die Funkfeldstärke am Zellenrand wesentlich kleiner als im Zelleninneren; in FIG 1 ist diese Dämpfung mit konzentrischen Kreisen um die Basisstation herum verdeutlicht. Beispielsweise durch Regen bedingte, ebenfalls entfernungsabhängige Zusatzdämpfungen können die bei den Network Terminations am Zellenrand zur Verfügung stehende Empfangsleistung zusätzlich sehr stark verringern.

In einem solchen Funksystem, das im Prinzip ein Punkt-zu-Multipunkt-System darstellt (der Sender der Basisstation kann die Empfänger vieler Teilnehmer erreichen), kann die Signalübertragung von der Basisstation abwärts zu den Funkteilnehmern hin im Zeitmultiplex (TDM - Time Division Multiplex) in einem 155-Mbit/s-Bitstrom vor sich gehen und die Signalübertragung von den Funkteilnehmern aufwärts zur Basistation hin in einem TDMA(Time Division Multiple Access)-Zugriffsverfahren.

In einem solchen System wird die Shannon'sche Kanalkapazität in zweifacher Hinsicht nicht optimal ausgenutzt:

Alle Network Terminations (NT in FIG 1) verarbeiten die volle Summenbitrate von 155 Mbit/s des Abwärts-Zeitmultiplexsignals, obwohl in der Regel nur ein kleiner Teil dieser Bitrate für die jeweilige Network Termination bestimmt ist. Die hohe Bandbreite des Zeitmultiplexsignals führt dabei zu einem entsprechend schlechten Signal/Stör-Leistungsverhältnis am teilnehmerindividuellen Empfänger.
Die Sendeleistung insbesondere der Basisstation (BS in FIG 1) ist aus telekommunikationsrechtlichen und/oder technischen Gründen begrenzt, woraus sich bei gegebenen Parametern wie RF-Sendefrequenz, Summenbitrate, Antennengewinn, Signal/Stör-Verhältnis der grösstmögliche Zellenradius ergibt; bei denjenigen Network Terminations (NT in FIG 1), die näher an der Basisstation liegen, ist die Empfangsleistung - und damit auch das Signal/Stör-Leistungsverhältnis - dabei grösser, als dies für eine vorgegebene Bitfehlerrate nötig ist, so dass insoweit Sendeleistung 'verschenkt' wird.

Die - bei TDM übliche - gleichmäßige Verteilung der zur Verfügung stehenden Gesamtleistung über der Zeit t und der Frequenz f verdeutlicht das in Bild 2 dargestellte sog. 'water-filling'-Diagramm für einen Kanal mit einer Bandbreite B, einer Zeitdauer T und einer Sendeleistung Pₛ. Eine solche gleichmässige Leistungsverteilung, wie sie in der in FIG 2 schraffierten ebenen Oberfläche des Diagramms zum Ausdruck kommt, ist ideal in einem Funksystem, in dem alle Network Terminations den gleichen konstanten Abstand von der Basisstation haben.
Nimmt man die Zeitdauer T als konstant an, so dass sie im Diagramm nicht dargestellt werden muss, und führt man den Abstand r von der Basisstation als dritte Variable ein, so erhält man für die für eine konstante Bitfehlerrate benötigte Sendeleistung P die in FIG 3 schattiert angelegte gekrümmte Oberfläche, die sich ergibt, indem man für jeden Punkt der Ebene die benötigte Leistung P für eine vorgegebene Bitfehlerrate (z.B. 10⁻⁹) aufträgt. Bei vernachlässigbaren Multipatheffekten ist P von der Frequenz kaum abhängig. Die in FIG 2 dargestellte Leistungsverteilung nach dem 'water-filling'-Algorithmus, d.h. bei vom Abstand r unabhängiger Leistung Pₛ, ist in FIG 3 wiederum schraffiert eingezeichnet. Der Abstand zwischen der gekrümmten und der geraden Oberfläche ist dann ein Maß für die oben so apostrophierte, bei einem gegebenen Abstand r 'verschenkte' Leistung.

Zur Optimierung der Leistungsverteilung in Aufwärtsrichtung (von den Funkteilnehmern (NT) zur Basistation BS hin) kann man innerhalb einer Funkzelle jeweils die Empfangsleistung an den einzelnen Network Terminations NT messen und als Maß für die jeweilige Funkfelddämpfung nutzen, nach Maßgabe dessen dann die Sendeleistung der betreffenden Network Termination entsprechend nachgeregelt wird.
Zur Optimierung der Leistungsverteilung in Abwärtsrichtung (von der Basistation BS zu den Funkteilnehmern (NT) hin) können mit adaptiven Antennen die einzelnen Network Terminations NT einer Funkzelle nacheinander angesteuert werden, wobei der höhere Gewinn solcher Antennen gegenüber omnidirektionalen Antennen bei gleicher Sendeleistung die Überbrückung entsprechend größerer Entfernungen erlaubt. Adaptive Antennen stehen allerdings erst am Anfang der Entwicklung.
Man kann auch für weiter entfernte Network Terminations einerseits und Network Terminations im Nahbereich der Basisstation andererseits unterschiedliche Modulationsverfahren verwenden, beispielsweise 16QAM für den inneren und QPSK für den äusseren Bereich der Funkzelle. Das erforderliche Signal/Stör-Verhältnis (S/N) ist bei QPSK um 7 dB kleiner als bei 16QAM. Bei 16QAM erhöhen sich allerdings, speziell bei den Verstärkern, die Anforderungen an die Linearität. Ein solches Verfahren ist vor allem für OFDM geeignet.

Die Erfindung zeigt nun einen anderen Weg zu einer Optimierung der Leistungsverteilung innerhalb einer Funkzelle.

Die Erfindung betrifft ein System zur Übertragung von Digitalsignalen in einem Funk-Teilnehmeranschlussnetz, insbesondere in einem breitbandigen RLL(Radio in the Local Loop)-Teilnehmeranschlussnetz; dieses Übertragungssystem ist erfindungsgemäß dadurch gekennzeichnet, dass für die Digitalsignalübertragung von der Basisstation einer Funkzelle zu den in der Funkzelle befindlichen Funkteilnehmern hin die Gesamt-Sendeleistung der Basisstation auf eine Mehrzahl von Frequenz-Teilbändern und/oder Zeitabschnitten mit unterschiedlicher Sendeleistung aufgeteilt ist und die für in grösserer oder kleinerer Entfernung von der Basisstation befindliche Funkteilnehmer bestimmten Digitalsignale in Frequenz-Teilbändern und/oder Zeitabschnitten mit entsprechend höherer bzw. niedrigerer Sendeleistung der Basisstation übertragen werden.
Dabei kann in weiterer Ausgestaltung der Erfindung eine feste Anzahl von Frequenz-Teilbändern mit jeweils fest vorgegebener Sendeleistung der Basisstation vorgesehen sein, von denen jeder Verbindung von der Basisstation zu einem Funkteilnehmer hin nach Maßgabe von dessen Entfernung von der Basisstation ein oder mehrere Frequenz-Teilbänder der jeweils benötigten Sendeleistung zugeordnet werden.
In weiterer Ausgestaltung der Erfindung kann auch die Sendeleistung der Basisstation mit einer oder mehreren ganzzahligen Harmonischen einer Sinusschwingung vorgegebener Frequenz moduliert sein und jeder Verbindung von der Basisstation zu einem Funkteilnehmer hin nach Maßgabe von dessen Entfernung von der Basisstation ein Zeitabschnitt der benötigten Sendeleistung zugeordnet werden.

Mit einer solchen Leistungsskalierung im Frequenz- und/oder Zeitbereich, derzufolge den jeweils gerade bestehenden Verbindungen zwischen Basisstation und Funkteilnehmern jeweils ein Frequenzband-Teilbereich bzw. Zeitabschnitt nur mit der jeweils erforderlichen Basisstations-Sendeleistung zugewiesen wird, ermöglicht die Erfindung vorteilhafterweise eine optimale Leistungsverteilung innerhalb der Funkzelle, wobei entweder die Gesamt-Sendeleistung der Basisstation entsprechend reduziert werden kann oder aber - bei gleichbleibender Gesamt-Sendeleistung - die gewonnene Leistung zur Erhöhung des Zellenradius genutzt werden kann.

Die Modulation der Sendeleistung mit einer oder mehreren Sinusschwingungen, die ganzzahlige Harmonische einer Sinusschwingung vorgegebener Frequenz sind, ermöglicht die gezielte Zuordnung von Phasen großer bzw. kleiner Sendeleistung zu den einzelnen Verbindungen zwischen der Basisstation und den mehr oder weniger entfernten Funkteilnehmern nach Maßgabe der Entfernung. Bei hinreichend kleinen Modulationsfrequenzen (z.B. 10 Khz) ist mit einer Modulation der Sendeleistung eine nur unwesentliche Verbreiterung des RF-Spektrums verbunden.

Bei einer Aufteilung des insgesamt verfügbaren Frequenzbandes in Frequenz-Teilbänder unterschiedlicher Basisstations-Sendeleistung variiert bei z.B. 8 Frequenz-Teilbändern und einer Leistungsabstufung von beispielsweise jeweils 3 dB pro Frequenz-Teilband die Sendeleistung um 24 dB. Die Leistungen der Frequenz-Teilbänder addieren sich geometrisch, d.h. die Gesamtleistung befindet sich im wesentlichen in den Frequenz-Teilbändern mit der höchsten Leistung. Die Reichweitenerhöhung ist dementsprechend groß.

Die Signalübertragung von der Basisstation abwärts zu den Funkteilnehmern hin kann wiederum, ggf. in jedem Frequenz-Teilband für sich, im Zeitmultiplex vor sich gehen; als Modulationsverfahren für die zu übertragenden Digitalsignale kann einheitlich QPSK vorgesehen sein. Die Verwendung von zueinander orthogonalen Trägern für die einzelnen Frequenz-Teilbänder vermeidet die sonst bei FDMA (Frequency Division Multiple Access) unvermeidbaren Filterverluste.

Weitere Besonderheiten der Erfindung werden aus der nachfolgenden näheren Erläuterung an Hand der Zeichnungen ersichtlich. Dabei zeigen
FIG 1 das typische Bild einer Funkzelle mit darin auftretenden Dämpfungen und
FIG 2 die gleichmäßige Verteilung der zur Verfügung stehenden Gesamt-Sendeleistung über der Zeit und der Frequenz;
FIG 3 verdeutlicht den Verlauf der für eine konstante Bitfehlerrate benötigten Sendeleistung in Abhängigkeit vom Abstand des Funkteilnehmers von der sendenden Basisstation.
FIG 4 zeigt eine Aufteilung der Gesamt-Sendeleistung in Frequenz-Teilbänder unterschiedlicher Sendeleistung, und
FIG 5 verdeutlicht eine Aufteilung der Gesamt-Sendeleistung in Zeitabschnitte unterschiedlicher Sendeleistung.

Die Zeichnungen FIG 1, FIG 2 und FIG 3 wurden oben bereits erläutert, so dass sich weitere Erläuterungen an dieser Stelle erübrigen.

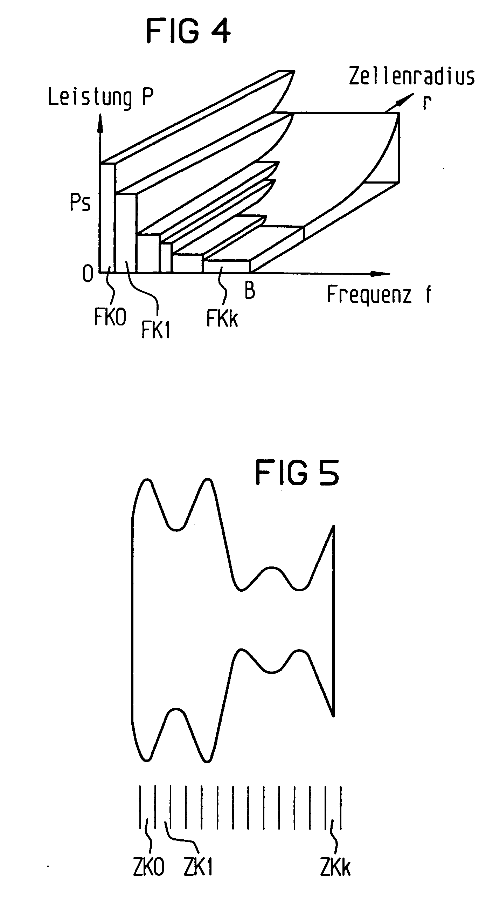

In FIG 4 ist schematisch ein Ausführungsbeispiel einer Aufteilung der Gesamt-Sendeleistung der Basisstation (BS in FIG 1) einer Funkzelle (FIG 1) in Frequenz-Teilbänder FK0, FK1, ... FKk unterschiedlicher Sendeleistung dargestellt, von denen zur Digitalsignalübertragung von der Basisstation zu den in der Funkzelle befindlichen Funkteilnehmern (NT in FIG 1) hin jeder Verbindung von der Basisstation zu einem Funkteilnehmer hin nach Maßgabe von dessen Entfernung von der Basisstation ein oder mehrere Frequenz-Teilbänder der jeweils benötigten Sendeleistung(en) zugeordnet werden, so dass die für in grösserer Entfernung von der Basisstation befindliche Funkteilnehmer bestimmten Digitalsignale in Frequenz-Teilbändern mit entsprechend höherer Sendeleistung der Basisstation übertragen werden und die für in kleiner Entfernung von der Basisstation befindliche Funkteilnehmer bestimmten Digitalsignale in Frequenz-Teilbändern mit entsprechend niedrigerer Sendeleistung.

Die von der Basisstation BS (in FIG 1) mit den einzelnen frequenz-teilbandindividuellen Sendeleistungen ausgesendeten Signale bilden ein OFDM(Orthogonal Frequency Division Multiplex)-Signal mit wenigen Trägern, wobei der eigentliche Vielfachzugriff im Zeitmultiplex (TDM) vor sich geht. Durch die Verwendung nur weniger (z.B 4 bis 16) Träger bleibt der Aufwand für das OFDM indessen gering. Andererseits wird aber die Symboldauer so stark verlängert, daß ein sonst bei TDM/TDMA wegen sog. Multipathverzerrungen erforderlicher aufwendiger Entzerrer entfallen kann.

Bei OFDM-Systemen ist an sich der Crestfaktor sehr ungünstig, was sich vor allem bei stark nichtlinearen Verstärkern nachteilig bemerkbar macht. Bei der Aufteilung des insgesamt verfügbaren Frequenzbandes in Frequenz-Teilbänder unterschiedlicher Basisstations-Sendeleistung addieren sich die Leistungen der Frequenz-Teilbänder jedoch geometrisch, d.h. die Gesamtleistung wird im wesentlichen von dem Frequenz-Teilband mit der größten Leistung bestimmt. Der Crestfaktor ist daher wesentlich günstiger als bei OFDM mit konstanten Trägeramplituden.

Die Aufteilung des insgesamt verfügbaren Frequenzbandes in Frequenz-Teilbänder unterschiedlicher Basisstations-Sendeleistung erlaubt auch eine Verbesserung des Frequenz-Re-Use. Die Gleichkanalstörung von Frequenz-Teilbändern mit kleiner Sendeleistung ist von Haus aus sehr gering. Die Gleichkanalstörung der Frequenz-Teilbänder mit hoher Leistung sind zwar ebenso groß wie bei den bisherigen Systemen, beschränken sich jetzt jedoch auf einen wesentlichen kleineren Frequenzbereich. Prinzipiell hält das Übertragungssystem die Störleistung so klein wie möglich.

Es können auch Frequenz-Teilbänder nicht mit jeweils fest vorgegebener Sendeleistung der Basisstation, sondern mit kontinuierlich steuerbarer Sendeleistung vorgesehen sein. Eine solche Ausgestaltung des Übertragungssystems erlaubt eine adaptive Anpassung an die in der Funkzelle jeweils gegebenen Verhältnisse (z.B. regenbedingte Zunahme der Funkfelddämpfung während des Bestehens einer Verbindung, Anzahl der aktiven Funkteilnehmer).

Die für eine Network Termination (NT in FIG 1) bestimmten Signale können auch auf Frequenz-Teilbänder unterschiedlicher Leistung aufgeteilt werden. Die empfangenen Bits sind dann je nach Frequenz-Teilband mehr oder weniger zuverlässig, wobei mit Hilfe eines entsprechenden Codierverfahrens die weniger zuverlässigen Bits effektiv zu korrigieren sind.

Das Frequenzband FK0 mit der höchsten Leistung kann auch als Notkanal für alle Verbindungen von der Basisstation (BS in FIG 1) zu den Network Terminations der Funkteilnehmer (NT in FIG 1) verwendet werden, über den dann bei - z.B. durch starken Regen bedingter - stark erhöhter Funkfelddämpfung zumindest noch Telefonieverkehr möglich ist.

In FIG 5 ist schematisch eine Aufteilung der Gesamt-Sendeleistung der Basisstation (BS in FIG 1) einer Funkzelle (FIG 1) in Zeitabschnitte ZK0, ZK1, ... ZKk unterschiedlicher Sendeleistung verdeutlicht, von denen zur Digitalsignalübertragung von der Basisstation zu den in der Funkzelle befindlichen Funkteilnehmern (NT in FIG 1) hin jeder Verbindung von der Basisstation zu einem Funkteilnehmer hin nach Maßgabe von dessen Entfernung von der Basisstation ein oder mehrere Zeitabschnitte der jeweils benötigten Sendeleistung(en) zugeordnet werden, so dass die für in grösserer Entfernung von der Basisstation befindliche Funkteilnehmer bestimmten Digitalsignale in Zeitabschnitten mit entsprechend höherer Sendeleistung der Basisstation übertragen werden und die für in kleiner Entfernung von der Basisstation befindliche Funkteilnehmer bestimmten Digitalsignale in Zeitabschnitten mit entsprechend niedrigerer Sendeleistung. Die in FIG 5 skizzierte Leistungsmodulation ergibt sich dabei aus der Überlagerung der ersten und dritten Harmonischen einer (z.B. 10-kHz-)Sinusschwingung. In den Empfängern der Funkteilnehmer kann die Leistungsmodulation mit Hilfe einer entgegengesetzten Modulation wieder aufgehoben werden.

Die für eine Network Termination (NT in FIG 1) bestimmten Signale können auch auf Zeitabschnitte unterschiedlicher Leistung aufgeteilt werden. Die empfangenen Bits sind dann je nach Zeitabschnitt mehr oder weniger zuverlässig, wobei mit Hilfe eines entsprechenden Codierverfahrens die weniger zuverlässigen Bits effektiv zu korrigieren sind.

Der Zeitabschnitt Z0 mit der höchsten Leistung kann auch als Notkanal für alle Verbindungen von der Basisstation (BS in FIG 1) zu den Network Terminations der Funkteilnehmer (NT in FIG 1) verwendet werden, über den dann bei - z.B. durch starken Regen bedingter - stark erhöhter Funkfelddämpfung zumindest noch Telefonieverkehr möglich ist.

Es sei noch besonders bemerkt, dass eine Leistungsskalierung im Frequenzbereich, wie sie oben an Hand von FIG 4 erläuert wurde, mit einer Leistungsskalierung im Zeitbereich, wie sie oben an Hand von FIG 5 eräutert wurde, auch kombiniert sein kann, ohne dass dies hier noch weiterer Erläuterungen bedarf.

## Patentansprüche

1. System zur Übertragung von Digitalsignalen in einem Funk-Teilnehmeranschlussnetz, insbesondere in einem breitbandigen RLL(Radio in the Local Loop)-Teilnehmeranschlussnetz,
**dadurch gekennzeichnet,**
dass für die Digitalsignalübertragung von der Basisstation einer Funkzelle zu den in der Funkzelle befindlichen Funkteilnehmern hin die Gesamt-Sendeleistung der Basisstation auf eine Mehrzahl von Frequenz-Teilbändern und/oder Zeitabschnitten mit unterschiedlicher Sendeleistung aufgeteilt ist und die für in grösserer oder kleinerer Entfernung von der Basisstation befindliche Funkteilnehmer bestimmten Digitalsignale in Frequenz-Teilbändern und/oder Zeitabschnitten mit entsprechend höherer oder niedrigerer Sendeleistung der Basisstation übertragen werden.

2. Übertragungssystem nach Anspruch 1,
**dadurch gekennzeichnet,**
dass eine feste Anzahl von Frequenz-Teilbändern mit jeweils fest vorgegebener Sendeleistung der Basisstation vorgesehen ist, von denen jeder Verbindung von der Basisstation zu einem Funkteilnehmer hin nach Maßgabe von dessen Entfernung von der Basisstation ein oder mehrere Frequenz-Teilbänder der benötigten Sendeleistung zugeordnet werden.

3. Übertragungssystem nach Anspruch 1 oder 2,
**dadurch gekennzeichnet,**
dass Frequenz-Teilbänder mit kontinuierlich steuerbarer Sendeleistung der Basisstation vorgesehen sind.

4. Übertragungssystem nach einem der Ansprüche 1 bis 3,
**dadurch gekennzeichnet,**
dass die Sendeleistung der Basisstation mit einer oder mehreren ganzzahligen Harmonischen einer Sinusschwingung vorgegebener Frequenz moduliert ist und jeder Verbindung von der Basisstation zu einem Funkteilnehmer hin nach Maßgabe von dessen Entfernung von der Basisstation ein Zeitabschnitt der benötigten Sendeleistung zugeordnet wird.

5. Übertragungssystem nach einem der Ansprüche 1 bis 4,
**dadurch gekennzeichnet,**
dass einer Verbindung von der Basisstation zu einem Funkteilnehmer mehrere Zeitabschnitte unterschiedlicher Sendeleistung zugeordnet werden.

6. Übertragungssystem nach einem der Ansprüche 1 bis 5,
**dadurch gekennzeichnet,**
dass einer Verbindung von der Basisstation zu einem Funkteilnehmer mehrere Frequenz-Teilbänder unterschiedlicher Sendeleistung zugeordnet werden.

7. Übertragungssystem nach einem der Ansprüche 1 bis 6,
**gekennzeichnet durch**
die Verwendung von zueinander orthogonalen Trägern für die einzelnen Frequenz-Teilbänder.

8. Übertragungssystem nach einem der Ansprüche 1 bis 7,
**dadurch gekennzeichnet,**
dass ein Frequenz-Teilband bzw. Zeitabschnitt hoher Sendeleistung zugleich als Notkanal für alle Verbindungen von der Basisstation zu den Funkteilnehmern vorgesehen ist.

9. Übertragungssystem nach Anspruch 7,
**dadurch gekennzeichnet,**
dass das Frequenz-Teilband bzw. Zeitabschnitt mit der höchsten Sendeleistung als Notkanal vorgesehen ist.
